(19) Europäisches Patentamt
European Patent Office
Office européen des brevets

(11) Numéro de publication: **0 253 699 B1**

# (12) FASCICULE DE BREVET EUROPEEN

(45) Date de publication du fascicule du brevet: **09.05.90**

(21) Numéro de dépôt: **87401402.0**

(22) Date de dépôt: **22.06.87**

(51) Int. Cl.⁵: **B32B 17/10**, B29C 71/02, B32B 27/40 // B60J1:02

(54) **Procédé pour la fabrication d'une feuille en matière plastique transparente de haute qualité optique.**

(30) Priorité: **24.06.86 FR 8609081**

(43) Date de publication de la demande: **20.01.88 Bulletin 88/3**

(45) Mention de la délivrance du brevet: **09.05.90 Bulletin 90/19**

(84) Etats contractants désignés: **AT BE CH DE ES FR GB GR IT LI LU NL SE**

(56) Documents cités:
**GB-A- 692 888**
**US-A- 2 431 042**
**US-A- 2 510 967**

(73) Titulaire: **SAINT-GOBAIN VITRAGE INTERNATIONAL, 18, avenue d'Alsace, F-92400 Courbevoie(FR)**

(72) Inventeur: **Daude, Gérard, 11 Rue René Voisin, F-33140 Villenave d'Ornon(FR)**
Inventeur: **Bravet, Jean-Louis, 5 Avenue du Moulin, F-60150 Thourotte(FR)**
Inventeur: **Moncheaux, Michel, 9 Rue des Sablons, F-60200 Compiegne(FR)**
Inventeur: **Drujon, Sylvie, 31, Rue Alexander Flemming, F-60150 Thourotte(FR)**
Inventeur: **Dimier, Gérard, 53, Avenue Georges Clémenceau, F-33405 Talence(FR)**

(74) Mandataire: **Muller, René et al, SAINT-GOBAIN RECHERCHE 39, quai Lucien Lefranc, F-93304 Aubervilliers(FR)**

EP 0 253 699 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne la fabrication d'une feuille en matière plastique transparente de haute qualité optique qui peut être utilisée seule ou en association avec d'autres matériaux et notamment dans les vitrages feuilletés où elle est associée à un support monolithique ou feuilleté en verre et/ou en matière plastique, par exemple des parebrise de véhicule, la feuille de matière plastique comprenant au moins une couche à base d'un polyuréthane présentant des propriétés d'absorbeur d'énergie.

Des feuilles de matière plastique pouvant être utilisées dans des vitrages feuilletés du type décrit précédemment ont déjà été proposées. Ainsi dans la publication de brevet français 2 398 606, on décrit une feuille présentant deux couches, à savoir une couche d'une matière thermoplastique qui dans l'application aux vitrages feuilletés comprenant une seule feuille de verre, est une couche intercalaire présentant des propriétés d'absorbeur d'énergie, et une couche de matière thermodurcissable présentant des propriétés d'antilacération et d'auto cicatrisation.

La couche intercalaire ayant des propriétés d'absorbeur d'énergie est un polyuréthane thermoplastique obtenu à partir d'au moins un diisocyanate aliphatique et d'au moins un polyesterdiol ou polyétherdiol, le rapport des groupements équivalents NCO aux groupements équivalents OH étant de préférence compris entre 0,8 et 0,9. Le vitrage utilisant une telle feuille à deux couches conserve ses bonnes propriétés optiques et l'adhésion reste bonne entre les éléments, dans des conditions de température et d'humidité très variables, mais les propriétés bio-mécaniques du vitrage et notamment la résistance aux chocs ne sont pas entièrement satisfaisantes. En revanche, la feuille de matière plastique à deux couches peut être enroulée, manipulée aisément sans détérioration de sa qualité optique.

On connait encore d'après la publication de brevet européen 0 133 090 une feuille transparente de haute qualité optique apte à être utilisée seule ou en association avec d'autres matériaux et notamment dans la fabrication des vitrages feuilletés décrits précédemment, cette feuille comprenant une couche formée dans un processus en continu par coulée réactive, sur un support plan horizontal duquel elle est détachable, d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5000 mPa·s, à + 40°C, le composant polyol comprenant au moins un polyol long difonctionnel de masse moléculaire comprise entre 500 et 4000 et au moins un diol court en tant qu'agent d'allongement de chaine. Par coulée réactive on entend la coulée sous forme d'une couche ou d'un film d'un mélange liquide des composants à l'état de monomères ou de prépolymères, suivie d'une polymérisation de ce mélange par la chaleur.

Un vitrage de sécurité utilisant une telle couche présente de bonnes propriétés bio-mécaniques et ce, dans des conditions de température et d'humidité variables. Cependant, lorsque à la sortie de la ligne de fabrication de la feuille de matière plastique, pour des raisons de stockage et de facilité de manipulation, on enroule la feuille pour former des bobines, en utilisant à cette fin un film intercalaire généralement en polyéthylène, et que l'on déroule ensuite la feuille avant son utilisation, on observe des marques ou empreintes laissées par le film intercalaire sur la couche de polyuréthane ayant des pro priétés d'absorbeur d'énergie désignée plus commodément par couche AE.

Ces marques ne peuvent être éliminées totalement par la suite, même lorsqu'on soumet la feuille de matière plastique à un cycle thermique de plusieurs minutes à une température supérieure à 100°C, par exemple 10 minutes à 120°C.

Le marquage de la feuille de matière plastique se produit quelque soit le degré de polymérisation de la couche AE obtenue au bout de la ligne de fabrication. Le marquage étant cependant d'autant plus accentué que le degré de polymérisation est plus faible. Pour déterminer le degré de polymérisation de la couche AE, une méthode simple consiste à mesurer le rapport entre la hauteur des pics NCO et la hauteur des pics CH du spectre infra-rouge de la couche AE à la sortie de la zone de polymérisation.

On considère que la couche AE est totalement polymérisée lorsque le pic NCO a disparu.

En fait, il semble que la polymérisation ou le mûrissement de la couche n'est jamais total au bout d'une ligne industrielle. Pour obtenir une polymérisation complète, il faudrait utiliser un cycle thermique de polymérisation beaucoup plus long que les cycles utilisés couramment en production industrielle, ou alors il faudrait utiliser des températures plus élevées.

Dans un cas comme dans l'autre, les inconvénients économiques sont évidents.

L'invention propose un procédé de fabrication de la couche AE, rapide et économique et qui le cas échéant lui procure une excellente résistance au marquage, notamment au marquage lors de l'enroulement sous forme de bobine, enroulement qui lui permet d'être manipulée et stockée aisément.

Par couche, on entend aussi bien la couche sur son support de formation que la feuille détachée dudit support.

Conformément à l'invention, on fait subir à la couche de polyuréthane AE obtenue par coulée réactive sur un support de coulée plan comme décrit ci-dessus ou encore par pulvérisation réactive, présentant un état d'avancement de polymérisation correspondant à un rapport NCO/CH inférieur à 0,7, un traitement par de l'eau sous forme liquide ou vapeur et de préférence lorsque l'eau est sous forme liquide par de l'eau chaude à une température supérieure à 80°C, pour obtenir un rapport NCO/CH nul (égal à zéro).

Le traitement par de l'eau selon l'invention permet d'achever rapidement la polymérisation de la couche tout en conservant, et même en améliorant les propriétés mécaniques de la couche, notamment sa résistance à la rupture et sa résistance à l'allongement.

Lorsque la couche est conditionnée et/ou stockée avec interposition d'un film intercalaire sous forme de feuilles empilées, ou sous forme d'un enroulement, après désempilage ou déroulement de la couche, on soumet celle-ci à un traitement thermique adéquat, par exemple un cycle d'au moins une minute à une température d'au moins 100°C environ.

Pour accélérer le traitement, avantageusement, on procède avec de l'eau à une température supérieure à 90°C, et ce pendant une durée d'au moins une minute.

Le traitement par de l'eau chaude, selon l'invention, ne supprime pas à proprement parler le marquage de la couche dû au contact avec le film intercalaire, mais celui-ci n'est plus un marquage persistant car il peut disparaitre au cours du traitement thermique de la couche qui suit le déroulement de la bobine ou le désempilage des feuilles. Le traitement thermique peut s'effectuer juste avant l'assemblage avec le support pour former le vitrage. Ainsi, l'invention propose un procédé qui bien que n'empêchant pas la couche AE d'être marquée à l'enroulement, permet à ladite couche de retrouver ses qualités optiques d'origine, notamment ses qualités de transparence après un traitement thermique, par exemple un chauffage à une température de l'ordre de 100°C et plus, généralement durant au moins 1 minute.

Le traitement avec de l'eau selon l'invention peut s'effectuer avec de l'eau sous forme liquide. Dans ce cas, on trempera la couche dans un bain d'eau chaude, de préférence un bain d'eau bouillante à 100°C. Comme évoqué précédemment, plus la température de l'eau du bain est élevée et plus la durée du traitement peut être diminuée pour une efficacité similaire.

Pour encore diminuer cette durée de traitement par l'eau, on utilise avantageusement une solution aqueuse contenant un catalyseur aminé à raison de 1 à 10 % en poids de la solution et de préférence environ 5 % en poids.

Les catalyseurs aminés convenables sont tous les catalyseurs aminés connus de la technique pour favoriser la réaction entre les groupes isocyanates et l'eau. De préférence, le catalyseur est choisi dans le groupe formé par le diazabicyclo n-décène ( par exemple le produit commercialisé sous l'appellation DBU par la société ABBOT LAB), le triéthylènediamine (par exemple le produit commercialisé sous l'appellation DABCO par la société AIR PRODUCTS), un mélange de ce produit et de dipropylèneglycol, des polyalkylènepolyamines (par exemple le produit commercialisé sous l'appellation BEROLAMINE 353 par la société BEROL).

Dans une variante, on peut utiliser une solution aqueuse pour le traitement de la couche, en ajoutant à l'eau d'autres produits, notamment un produit réactif avec les isocyanates par exemple du bisulfi te de sodium $NaHSO_3$ à raison d'environ 10 % en poids de la solution aqueuse ou encore des diamines.

Le traitement avec de l'eau peut s'effectuer avantageusement avec de l'eau sous forme de vapeur. Un des avantages de l'utilisation de la vapeur d'eau est que l'on peut opérer à des températures supérieures à 100°C, par exemple entre 120°C et 140°C, à la pression atmosphérique. Un autre avantage de l'utilisation de la vapeur est que l'on peut opérer alors que la couche AE formée est encore sur le support de formation.

En revanche, lorsqu'on utilise un bain liquide, il semble nécessaire d'opérer sur la feuille détachée de son support de formation. Il peut alors y avoir un risque de marquage avant le traitement dû aux moyens d'extraction de la feuille. Bien entendu, on peut également traiter par de la vapeur d'eau la couche alors qu'elle a été détachée du support de formation.

On peut encore traiter la couche en deux étapes. Une première étape, par de la vapeur avant qu'elle n'arrive au contact des moyens extracteurs et une étape ultérieure par de l'eau liquide ou de la vapeur d'eau.

Outre les avantages déjà énoncés, le traitement selon l'invention accélère le murissement de la couche AE. De façon inattendue, il améliore les propriétés mécaniques de la couche en augmentant sa résistance à la rupture ainsi que l'allongement.

La couche AE que l'on traite selon l'invention a été décrite précédemment sous sa forme générale. Les proportions des composants du polyuréthane formant la couche AE sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroît et plus les propriétés mécaniques recherchées pour l'appli cation dans un vitrage feuilleté deviennent rapidement peu satisfaisantes. Lorsque tous les composants du polyuréthane sont difonctionnels, la limite inférieure de rapport NCO/OH pour l'obtention de propriétés mécaniques satisfaisante se situe à 0,9 environ. Lorsqu'un des composants au moins est trifonctionnel cette limite inférieure peut être baissée jusqu'à 0,8 environ. Lorsque le rapport NCO/OH est supérieur à 1, plus il croît et plus certaines propriétés mécaniques de la couche obtenue par coulée réactive sont renforcées, par exemple la couche devient plus rigide, mais étant donné le coût plus élevé du composant isocyanate par rapport à celui du composant polyol, le choix de ces rapports NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents OH dus au

diol court représentant cependant généralement de 2O à 7O % des groupements équivalents totaux du mélange formant le composant polyol dans le cas où le rapport des groupements équivalents NCO sur les groupements OH est de l'ordre de 1. Lorsqu'on augmente la proportion du diol court on durcit la couche et on augmente généralement son module.

Les diisocyanates convenables utilisés dans le cadre de l'invention sont choisis notamment parmi les isocyanates difonctionnels aliphatiques suivants : hexaméthylènediisocyanate (HMDI), 2,2,4-triméthyl-1,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m- et p-tétraméthylxylylènediisocyanate (m- et p- TMXDI), cis et transcyclohexane-1,4 diisocyanate (CHDI), 1,3 -(diisocyanatométhyl) cyclohexane (XDI hydrogéné).

On peut utiliser un composant isocyanate contenant des fonctions urées. Ces fonctions urées améliorent certaines propriétés mécaniques de la couche. Le taux d'urée peut représenter jusqu'à environ 1O % du poids total du composant isocyanate à fonctions urées. De préférence le taux d'urée est compris entre 5 et 7 % du poids total dudit composant. Pour la raison invoquée précédemment on utilise de préférence du 3-isocyanatométhyl-3,5,5 triméthylcyclohexyldiisocyanate comportant des fonctions urées (IPDI et dérivés).

Les polyols longs convenables sont choisis parmi des polyétherdiols ou des polyesterdiols de masse moléculaire 5OO - 4OOO ; les polyesterdiols étant les produits d'estérification d'un diacide tel que l'acide adipique, succinique, palmitique, azelaïque, sébacique, o-phtalique, et d'un diol tel un éthylèneglycol, propanediol -1,3, butanediol - 1,4, hexanediol- 1,6, les polyétherdiols de formule générale

$$H \left[ O\ (CH_2)n \right]_m OH$$

avec n = 2 à 6 ; m tel que la masse moléculaire soit située dans l'intervalle 5OO - 4OOO ou les polyétherdiols de formule générale

$$H \left[ O\underset{|}{\overset{CH3}{C}}H - CH2 \right]_m OH$$

avec m tel que la masse moléculaire soit située également dans l'intervalle 5OO-4OOO. On peut encore utiliser des polycaprolactone-diols.

On utilise de préférence un polytétraméthylène glycol (n = 4) de masse moléculaire 1OOO.

Les agents d'allongement de chaines convenables sont des diols courts de masse moléculaire inférieure à environ 3OO et de préférence inférieure à 15O, tels que les : éthylèneglycol, propanediol-1,2, propanediol-1,3, butanediol-1,2, -1,3, -1,4, diméthyl-2,2 propanediol-1,3 (néopentylglycol), pentanediol-1,5, hexanediol-1,6, octanediol-1,8, décanediol-1,1O, dodécanediol-1,12, cyclohexanediméthanol, bisphénol A, méthyl-2 pentanediol-2,4, méthyl-3 pentanediol- 2,4, éthyl- 2 hexanediol-1,3, triméthyl-2,2,4-pentanediol-1,3, diéthylèneglycol, triéthylèneglycol, tétraéthylèneglycol, butyne-2-diol-1,4,butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolpropionique. En général plus le diol est court plus la couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Une des caractéristiques de la couche ayant des propriétés d'absorbeur d'énergie est qu'elle est obtenue par coulée réactive sur un support plan horizontal. Cette coulée réactive dont une forme a déjà été décrite par exemple dans la publication de brevet français 2 442 128 pour l'obtention d'une couche de polyuréthane thermodurcissable à partir d'un mélange de composants trifonctionnels, fournit dans le cas de composants de départ difonctionnels une couche qui n'est pas entière ment thermoplastique lorsque le rapport des groupements NCO/OH est sensiblement égal à 1.

Le composant polyol peut contenir une faible proportion d'au moins un polyol de fonctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 9O et 1OOO, les polyols mixtes polyéther/polyester de fonctionnalité supérieure à 2, par exemple de fonctionnalité comprise entre 2 et 3. L'ajout d'un polyol de fonctionnalité supérieure à 2 provoque des liaisons de pontage supplémentaires entre les chaines du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle le polyol long représente environ de O,3O à O,45 équivalent, le diol court d'environ O,2 à O,7 équivalent et le polyol de fonctionnalité supérieure à 2 environ O à O,35 équivalent.

On peut encore réaliser la couche en remplaçant une partie du composant polyol par un produit à hydrogènes actifs différents tel une amine.

Suivant une réalisation de la couche de matière plastique, le composant isocyanate peut contenir dans des proportions limitées, par exemple inférieures à environ 15 % en équivalent NCO, au moins un triisocyanate tels un biuret d'isocyanate ou un triisocyanurate.

Sous un des aspect du procédé de traitement selon l'invention, il s'applique sur la feuille formée de la seule couche décrite précédemment.

Dans une variante, le procédé de traitement selon l'invention s'applique sur la couche décrite précédemment, alors qu'elle est associée a une couche de matière plastique autocicatrisable, o'est-à-dire résistant à la rayure et à l'abrasion.

La couche autocicatrisable résistante à la rayure en matière plastique est par exemple celle décrite dans les publications de brevets françaises 2 187 719 et 2 251 608. Cette couche autocicatrisable a dans les conditions normales de température, une haute capacité de déformation élastique, un faible module d'élasticité, inférieur à 2000 daN/cm² et de préférence inférieur à 200 daN/cm², et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 daN/cm² et un allongement d'environ 100 à 200 % avec moins de 1 % de déformation plastique.

Des exemples de monomères qui conviennent pour la préparation de ces polyuréthanes thermodurcissables sont d'une part les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis (isocyanatométhyl)benzène, le bis (4-isocyanatocyclohexyl)méthane, le bis (3-méthyl-4-isocyanatocyclohexyl) méthane, le 2,2-bis(4-isocyanatocyclohexyl)propane et le 3-isocyanatométhyl-3,5,5-triméthylcyclohexylisocyanate, ainsi que les biurets, isocyanurates et prépolymères de ces composés ayant une fonctionnalité de 3 ou davantage et d'autre part les polyols polyfonctionnels, comme les polyols ramifiés tels que les polyesterpolyols et polyétherpolyols obtenus - par réaction d'alcools polyfonctionnels, notamment le 1,2,3-propanetriol (glycérol), le 2,2-bis (hydroxyméthyl)-1-propanol (triméthyloléthane), le 2,2-bis (hydroxyméthyl)-1-butanol (triméthylolpropane), le 1,2,4,-butane-triol, le 1,2,6-hexane-triol, le 2,2-bis (hydroxyméthyl)-1,3-propane-diol (pentaérythritol) et le 1,2,3,4,5,6-hexane-hexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane.

Le poids moléculaire des polyols ramifiés est avantageusement d'environ 250 à 4000 et de préférence d'environ 450 à 2000. Des mélanges de différents polyisocyanates et polyols monomères peuvent être utilisés. Un polyuréthane thermodurcissable particulièrement préféré est celui décrit dans la publication de brevet française 2 251 608.

La couche ayant des propriétés d'absorbeur d'énergie, couche AE, peut contenir divers additifs qui servent généralement à faciliter sa fabrication par coulée réactive, ou qui peuvent améliorer ses propriétés.

Elle peut contenir un catalyseur tel un catalyseur d'étain par exemple le dibutyldilaurate d'étain, l'oxyde de tributylétain, l'octoate d'étain, un catalyseur organomercurique par exemple le propionate de phénylmercure, un catalyseur amine par exemple le diazabicyclo-(2,2,2)-octane, le 1,8-diazabicyclo (5,4,0)-undecene-7.

La couche peut contenir un stabilisant tel le bis (2,2,6,6-tétraméthyl-4 piperidyl) sebaçate, un antioxydant phénolique.

La couche peut contenir également un agent nappant tel une résine silicone, un ester fluoroalkylé, une résine acrylique.

Pour fabriquer la feuille de la variante à deux couches on peut opérer de la façon suivante:

On fabrique tout d'abord une couche de polyuréthane thermodurcissable par coulée du mélange des composants sur un support de coulée. Après polymérisation des monomères et formation d'une couche thermodurcissable d'épaisseur pouvant varier entre 0,1 et 0,8 mm, on coule le mélange réactionnel des composants de la couche ayant des propriétés d'absorbeur d'énergie. Après polymérisation, on traite la couche AE par l'eau ou la vapeur d'eau comme décrit précédemment.

Un dispositif pour la mise en œuvre du procédé de l'invention comprend un support de coulée constitué d'une sole mobile plane pour former la couche AE, une tête de coulée pour l'apport du mélange réactionnel apte à former la couche AE, un tunnel de polymérisation, des moyens de traitement par de l'eau sous forme liquide ou vapeur, des moyens pour extraire la feuille du support de coulée et le cas échéant des moyens pour enrouler la feuille sous forme de bobine.

Les moyens de traitement par de l'eau sont disposés en aval des moyens pour extraire la feuille du support de coulée lorsque l'eau est sous forme liquide, de sorte que la feuille de matière plastique à une ou deux couches peut être trempée dans le liquide.

Lorsque le traitement est réalisé par de la vapeur d'eau, les moyens de traitement sont avantageusement placés en amont des moyens extracteurs consistant généralement en un rouleau extracteur, de sorte qu'aucun marquage par ces moyens extracteurs ne peut se produire avant le traitement.

D'autres avantages et caractéristiques de l'invention apparaitront dans la description ci-après

d'exemples de dispositifs pour la mise en œuvre de l'invention, faite en référence aux figures.

La figure 1 représente un dispositif pour le traitement de la couche AE par trempage dans un bain d'eau chaude.

La figure 2 représente un dispositif pour le traitement de la couche AE par de la vapeur d'eau.

Le dispositif représenté sur la figure 1 est utilisé pour le traitement de la couche AE par trempage dans de l'eau chaude, de préférence de l'eau bouillante. Ce dispositif comprend une sole de coulée horizontale 1, par exemple en verre, sur laquelle a été coulée à l'aide d'une tête de coulée non représentée, le mélange réactionnel apte à former la couche AE 2, un tunnel de polymérisation 3 dont seule l'extrémité aval est représentée sur la figure. A la sortie du tunnel de polymérisation, le dispositif comprend un caisson de refroidissement 4 et des moyens d'extraction 5 de la couche de son support, ces moyens d'extraction étant ici un rouleau extracteur. En aval des moyens d'extraction est disposée une cuve 6 contenant l'eau chaude 7 pour le traitement. La couche AE y est introduite à l'aide de rouleaux de renvoi 8 et elle y est maintenue immergée pendant un parcours d'une durée d'environ 5 minutes. A l'aide d'autres rouleaux de renvoi 8, la couche est sortie du bain et elle passe ensuite entre une double rangée de moyens de rinçage 9 par projection d'eau. L'eau de rinçage est recueillie dans un entonnoir 10, et la couche est introduite dans une enceinte de séchage 11 puis dans une enceinte de refroidissement 12. A la sortie de l'enceinte de refroidissement 12, la couche AE traitée est associée au cours du passage entre deux rouleaux 13, 14 à un film intercalaire 15 en polyéthyléne et elle est enroulée pour former une bobine 16, puis stockée.

Le dispositif représenté sur la figure 2 est utilisé pour le traitement de la couche AE par de la vapeur d'eau. De même que le dispositif décrit en relation avec la figure 1, il comprend une sole de coulée horizontale 1 en verre, sur laquelle a été coulée à l'aide d'une tête de coulée non représentée un mélange réactionnel apte à former la couche AE 2, un tunnel de polymérisation 3, dont seule l'extrémité aval est représenté sur la figure. A la sortie du tunnel de polymérisation, le dispositif comprend un caisson de refroidissement 17, intercalé entre le bout du tunnel et l'enceinte 18 contenant la vapeur d'eau 19 amenée par une rampe 20 pour le traitement de la couche AE. La couche traverse cette enceinte alors qu'elle est encore au contact de son support de coulée 1. En aval de l'enceinte de traitement par la vapeur, le dispositif comprend un caisson de refroidissement 21 qui précède les moyens d'extraction 22 de la couche AE de son support de coulée. Après passage autour des rouleaux de renvoi 23, la couche traitée au cours du passage entre deux rouleaux 24, 25 est associée à un film intercalaire en polyéthylène 26 avant d'être enroulée pour former une bobine 27 puis stockée.

Les exemples suivants illustrent l'invention.

EXEMPLE 1

Sur un support en verre mobile défilant de manière continue, revêtu d'un agent de séparation qui peut être par exemple celui décrit dans la publication de brevet français 2 383 000, à savoir un produit d'addition modifié d'éthylène oxyde, on coule un mélange homogène avec les proportions suivantes de :

- 1000 g d'un polyéther d'un poids moléculaire d'environ 450 obtenu par condensation d'oxyde de 1,2-propylène avec du 2,2-bis (hydroxyméthyl)- 1-butanol et ayant une teneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,
- 1020 g d'un biuret de 1,6-hexanediisocyanate ayant une teneur en radicaux isocyanates libres d'environ 23,2 %.

On utilise une tête de coulée telle que celle décrite dans la publication de brevet français 2 347 170. On forme une couche uniforme qui après polymérisation sous l'effet de la chaleur, par exemple environ 15 minutes à 120°C, présente une épaisseur d'environ 0,19 mm et des propriétés d'autocicatrisation.

Pour fabriquer la couche ayant des propriétés d'absorbeur d'énergie, on prépare au préalable le composant polyol en mélangeant un polytétraméthylèneglycol de masse moléculaire 1000 (par exemple le produit commercialisé sous l'appellation Polymeg 1000 par la société QUAKER OATS), avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,02 % en poids calculé de la même façon que précédemment.

Le composant isocyanate utilisé est du 3-isocyanatométhyl-3,5,5 triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1.

Après dégazage sous vide des composants, le mélange porté à environ 40°C est coulé à l'aide d'une tête de coulée comme celle décrite dans la publication de brevet français 2 347 170, sur la couche de polyuréthane autocicatrisable formée précédemment. On forme ainsi une couche d'environ 0,53 mm d'épaisseur qui est soumis à un cycle de polymérisation consistant en 20 minutes de chauffage à 120°C environ.

A la sortie du tunnel de polymérisation, le rapport NCO/CH mesuré est de O,6. La feuille sur son support de coulée passe ensuite dans la partie du dispositif représentée sur la figure 1. Elle passe ainsi sous le caisson de refroidissement 4.

La feuille est ensuite extraite du support de coulée par le rouleau 5 et elle est plongée dans un bain 7 d'eau bouillante à 1OO°C. La durée du traitement est de 1O minutes. A la sortie du bain de traitement, le rapport NCO/CH mesuré est de O.

La feuille passe ensuite à travers une enceinte chauffée 11 pour être séchée, puis dans une enceinte de refroidissement 12.

La feuille peut être utilisée directement pour la fabrication de vitrages feuilletés de sécurité.

Les propriétés bio-mécaniques que l'on peut mesurer sur le vitrage obtenu sont au moins équivalentes à celles d'un vitrage formé avec une couche AE non traitée. Le tableau 1 en annexe indique les valeurs de résistance à la rupture ainsi que les résultats au marquage des couches obtenues dans les différents exemples.

EXEMPLE 2

On opère comme dans l'exemple 1, mais après refroidissement, la feuille est associée à un film intercalaire d'enroulage en polyéthylène 15 puis l'ensemble est enroulé pour former une bobine 16.

La feuille est stockée en bobine durant plusieurs jours. On déroule ensuite la feuille que l'on sépare de l'intercalaire. On observe des empreintes sur la couche AE dues essentiellement au contact du film intercalaire et de ses irrégularités de surface.

On soumet alors la feuille à un traitement thermique consistant à porter sa température à 1OO°C pendant 5 minutes. Après ce traitement, les empreintes ont disparues et on assemble la feuille avec un support en verre pour former un vitrage. On ne retrouve aucun marquage par la suite.

EXEMPLE TEMOIN 1

On prépare une feuille de matière plastique de la manière décrite dans l'exemple 2, sauf qu'on ne lui fait pas subir le traitement par de l'eau bouillante. La feuille est donc enroulée directement en bobine après le cycle de polymérisation.

Aprés stockage et déroulement comme décrit dans l'exemple 1, on observe les empreintes décrites précédemment, mais lorsqu'on soumet la feuille à un traitement thermique à 1OO°C pendant 5 minutes, ces empreintes ne s'effacent pas. Après assemblage avec le support pour former le vitrage, les empreintes sont toujours présentes.

On remarque donc que le traitement par l'eau bouillante décrit dans l'exemple 1, s'il n'empêche pas la couche AE d'être marquée au bobinage après le cycle de polymérisation, lui confère la propriété de rendre cette empreinte effaçable par un traitement thermique après déroulement de la feuille.

EXEMPLE TEMOIN 2

On opère de la même façon que dans l'exemple 2, sauf qu'on traite la feuille par de l'eau à une température de 8O°C pendant 1O minutes. Après ce traitement le rapport NCO/CH est de O,4.

La feuille est enroulée, stockée puis déroulée. Les empreintes apparentes subsistent après le traitement thermique et elles apparaissent encore sur le vitrage assemblé.

EXEMPLE TEMOIN 3.

On opère de la même façon que dans l'exemple 2, mais en réduisant le cycle de polymérisation de la couche de polyuréthane à 2O minutes à 1OO°C. A la sortie du tunnel de polymérisation, le rapport NCO/CH mesuré est de O,8.

Après traitement à l'eau bouillante, le rapport NCO/CH mesuré est de O,2.

Aprés extraction, stockage et déroulement, la feuille présente des empreintes qui après le traitement thermique ne disparaissent pas totalement.

EXEMPLE 3

On opère de la même façon que dans l'exemple 2. A la sortie du tunnel de polymérisation, le rapport NCO/CH mesuré est de O,6. La feuille, après extraction du support de coulée est plongée pendant 5 minutes dans un bain d'eau bouillante à 1OO°C, contenant 1 % en poids de DBU.

A la sortie du bain, le rapport NCO/CH mesuré est de O. On rince la feuille par passage devant des moyens de rinçage 9 qui sont ici des jets d'eau déminéralisée. La feuille est ensuite séchée et refroidie. Après enroulement comme dans l'exemple 1, stockage et déroulement, des empreintes apparaissent sur la feuille. Un traitement thermique à 1OO°C pendant 5 minutes efface définitivement toutes les empreintes.

La présence d'un catalyseur aminé dans le bain d'eau bouillante permet de réduire la durée du traitement par l'eau bouillante.

EXEMPLE 4

On opère de la même façon que dans l'exemple 3, sauf qu'on traite la feuille dans un bain d'eau bouillante contenant 5 % en poids de DABCO, pendant 5 minutes.

Le rapport NCO/CH mesuré est de O.

Les empreintes apparentes au déroulement de la feuille, disparaissent définitivement après un traitement thermique à 1OO°C pendant 5 minutes.

EXEMPLE 5

On opère de la même façon que dans l'exemple 2. A la sortie du tunnel de polymérisation, on fait passer la feuille alors qu'elle est toujours sur son support de formation, dans la partie du dispositif représentée sur la figure 2. L'ensemble passe dans une enceinte 18 contenant de la vapeur d'eau 19 à environ 12O°C - 13O°C. La durée du passage est d'environ 4 minutes. La vapeur d'eau est introduite dans l'enceinte par la rampe 2O sous une pression de 6 bars environ.

Après ce traitement à la vapeur d'eau, le rapport NCO/CH mesuré est de O.

La feuille est refroidie par passage sous le caisson de refroidissement 21 et elle est extraite du support de formation par le rouleau 22 pour être enroulée en étant associée à l'intercalaire en polyéthylène 26 et stockée sous forme de bobine 27.

Au déroulement ultérieur, des empreintes dues à l'intercalaire sont apparentes sur la feuille.

Après le traitement thermique à 1OO°C, pendant 5 minutes, les empreintes ont disparues et de façon définitive.

Le traitement à la vapeur d'eau est particulièrement intéressant car il peut être réalisé alors que la feuille est encore sur son support de formation, donc avant tout risque de marquage par un rouleau extracteur par exemple.

EXEMPLE 6

On opère de la même façon que dans l'exemple 2, sauf que la couche AE est formée à partir d'un composant polyol différent. Le composant polyol est ici préparé par mélange d'un polytétraméthylèneglycol de masse moléculaire 1OOO avec du butanediol-1,4 et du polycaprolactonetriol de masse moléculaire 3OO, les proportions des trois constituants étant telles que le polytétraméthylèneglycol apporte O,35 équivalent en groupes hydroxyles, le butanediol-1,4 en apportant O,55, le polycaprolactonetriol en apportant O,1.

La suite de la fabrication de la couche AE s'effectue selon la description de l'exemple 1.

A la sortie du tunnel de polymérisation, le rapport NCO/CH mesuré est de O,6 environ.

La feuille obtenue est extraite du support de coulée et elle subit le traitement décrit dans l'exemple 1.

Après le traitement thermique, avant l'assemblage avec le support pour former le vitrage feuilleté, la couche AE est exempte d'empreintes.

La qualité optique obtenue se conserve par la suite.

EXEMPLES 7 A 9

On opère avec la couche AE décrite dans l'exemple 6, de la même façon que dans les exemples 2, 3 et 4 respectivement. Les résultats du traitement de la couche AE par l'eau chaude ou la vapeur se retrouvent de façon semblable.

EXEMPLE TEMOIN 4

On opère comme dans l'exemple 6, sauf qu'à la sortie du tunnel de polymérisation, on laisse la feuille sur le support de coulée durant 14 jours à 2O°C. Au bout de cette durée, le rapport NCO/CH mesuré est égal à O.

EXEMPLE TEMOIN 5

On opère comme dans l'exemple 6, sauf que le cycle de polymérisation est de 9O mn à 12O°C. Le rapport NCO/CH est alors de O.

EXEMPLE TEMOIN 6

On opère comme dans l'exemple 6, sauf que le cycle de polymérisation est de 2O mn à 17O°C. Le rapport NCO/CH est alors de O.

EXEMPLES TEMOINS 7 A 9

On opére comme dans les exemples témoins 4 à 6, sauf qu'on enroule la feuille obtenue avec un film intercalaire. Après stockage et déroulement, on soumet la feuille à un traitement thermique de 1OO°C pendant 5 minutes.

Après ce traitement, les empreintes laissées par le film intercalaire ont disparues.

TABLEAU 1

| Exemples | Resistance a la rayure de la couche en MPA | Resultat au marquage |
|---|---|---|
| 1 | 40 | – |
| 2 | 16 | Bon |
| Temoin 1 | 40 | Mauvais |
| Temoin 2 | 40 | Mauvais |
| Temoin 3 | 40 | Mauvais |
| 3 | 40 | Bon |
| 4 | 40 | Bon |
| 5 | | Bon |
| 6 | | Bon |
| 7 à 9 | | Bon |
| Temoin 4 | 40 | – |
| Temoin 5 | 40 | – |
| Temoin 6 | 40 | – |
| Temoin 7 à 9 | 40 | Bon |

Le résultat au marquage est noté bon quand les empreintes de marquage peuvent s'effacer par un traitement thermique. Il est noté mauvais quand les empreintes de marquage ne peuvent s'effacer.

Le tableau 1 montre que le traitement par de l'eau permet d'achever la polymérisation de la couche de polyuréthane et qu'il procure à la couche la propriété de rendre les empreintes de marquage, effaçables par un traitement thermique ultérieur.

**Revendications**

1. Procédé de fabrication d'une couche de polyuréthane de haute qualité optique ayant des propriétés d'absorbeur d'énergie, par coulée réactive sur un support de coulée plan ou pulvérisation réactive des composants réactionnels suivi d'une polymérisation de la couche, caractérisé en ce qu'on traite la couche de polyuréthane alors qu'elle présente un état d'avancement de polymérisation correspondant à un rapport NCO/CH inférieur à 0,7, par de l'eau sous forme liquide ou vapeur jusqu'à obtenir un rapport NCO/CH égal à 0.

2. Procédé selon la revendication 1, caractérisé en ce qu'on traite la couche par de l'eau chaude à une température supérieure à 80°C et de préférence supérieure à 90°C, pendant une durée d'au moins une minute.

3. Procédé selon la revendication 2, caractérisé en ce que l'eau est de l'eau bouillante à 100°C.

4. Procédé selon une des revendications 1 à 3, caractérisé en ce que le traitement est effectué par trempage de la couche dans une solution aqueuse contenant un catalyseur aminé.

5. Procédé selon une des revendications 1 à 4, caractérisé en ce que le traitement est effectué par trempage de la couche dans une solution aqueuse contenant des produits réactifs avec les groupements isocyanates, notamment du bisulfite de sodium ou des diamines.

6. Procédé selon la revendication 1, caractérisé en ce que la vapeur d'eau est à une température comprise entre 120°C et 140°C.

7. Procédé selon la revendication 6, caractérisé en ce que le traitement par la vapeur d'eau est effectué sur la couche alors qu'elle est encore sur son support de formation.

8. Procédé selon une des revendications 1 à 7, caractérisé en ce qu'après le traitement par de l'eau, la couche ayant été mise en contact avec un film intercalaire pour le stockage, est soumise après retrait du film intercalaire à un traitement thermique.

9. Procédé selon la revendication 8, caractérisé en ce que le traitement thermique ultérieur consiste à porter la couche à une température d'au moins 100°C environ.

10. Procédé selon la revendication 9, caractérisé en ce que la couche est portée à au moins 100°C environ durant au moins 1 minute.

11. Procédé selon une des revendications 1 à 10, caractérisé en ce que la couche de polyuréthane ayant des propriétés d'absorbeur d'énergie est associée à une couche ayant des propriétés de résistance à la rayure et à l'abrasion en polyuréthane thermodurcissable.

## Claims

1. Process for the production of a polyurethane layer with high optical quality and having energy absorbing properties by reactive pouring on to a planar pouring support or reactive spraying of reaction components followed by a polymerization of the layer, characterized in that the polyurethane layer is treated when it has a polymerization advance state corresponding to a NCO/CH ratio below 0.7 by water in liquid or vapour form until a NCO/CH ratio equal to 0 is obtained.

2. Process according to claim 1, characterized in that the layer is treated by hot water at a temperature above 80°C for at least one minute.

3. Process according to claim 2, characterized in that the water is boiling water at 100°C.

4. Process according to one of the claims 1 to 3, characterized in that the treatment is performed by soaking the layer in an aqueous solution containing an amine catalyst.

5. Process according to one of the claims 1 to 4, characterized in that the treatment is performed by soaking the layer in an aqueous solution containing reactive products with isocyanate groups, particularly sodium disulphite or diamines.

6. Process according to claim 1, characterized in that the steam is at a temperature between 120 and 140°C.

7. Process according to claim 6, characterized in that the steam treatment is carried out on the layer whilst it is still on its formation support.

8. Process according to one of the claims 1 to 7, characterized in that following the water treatment, the layer which has been contacted with an intercollated film for storage undergoes a heat treatment after the intercollated film has shrunk.

9. Process according to claim 8, characterized in that the subsequent heat treatment consists of raising the layer to a temperature of approximately at least 100°C.

10. Process according to claim 9, characterized in that the layer is heated to at least approximately 100°C for at least one minute.

11. Process according to one of the claims 1 to 10, characterized in that the polyurethane layer having energy absorbing properties is associated with a layer having resistance to scratching and abrasion made from thermosetting polyurethane.

## Patentansprüche

1. Verfahren zur Herstellung einer energieabsorbierenden Polyurethanschicht hoher optischer Qualität durch reaktives Gießen auf einem ebenen Gießträger oder durch reaktives Pulverisieren der Reaktionskomponenten mit anschließender Polymerisation der Schicht, dadurch gekennzeichnet, daß man die Polyurethanschicht, während sie sich im Zustand fortschreitender Polymerisation entsprechend einem NCO/CH-Verhältnis von weniger als 0,7 befindet, mit flüssigem oder dampfförmigem Wasser bis zum Erreichen eines NCO/CH-Verhältnisses von 0 behandelt.

2. Verfahren nach Anspruch 1, dadurch gekennzeichnet, daß man die Schicht für die Dauer von wenigstens einer Minute mit heißem Wasser mit einer Temperatur von mehr als 80°C und vorzugsweise mehr als 90°C behandelt.

3. Verfahren nach Anspruch 2, dadurch gekennzeichnet, daß das Wasser kochendes Wasser von 100°C ist.

4. Verfahren nach einem der Ansprüche 1 bis 3, dadurch gekennzeichnet, daß die Behandlung durch Eintauchen der Schicht in eine wäßrige Lösung, die einen Aminkatalysator enthält, durchgeführt wird.

5. Verfahren nach einem der Ansprüche 1 bis 4, dadurch gekennzeichnet, daß die Behandlung durch Eintauchen der Schicht in eine wäßrige Lösung, die gegenüber den Isocyanatgruppen reaktionsfähige Stoffe, insbesondere Natriumbisulfit oder Diamine, enthält, durchgeführt wird.

6. Verfahren nach Anspruch 1, dadurch gekennzeichnet, daß der Wasserdampf eine Temperatur zwischen 120°C und 140°C hat.

7. Verfahren nach Anspruch 6, dadurch gekennzeichnet, daß die Behandlung der Schicht mit Wasserdampf durchgeführt wird, während sie sich noch auf dem Träger befindet, auf dem sie gebildet wurde.

8. Verfahren nach einem der Ansprüche 1 bis 7, dadurch gekennzeichnet, daß nach der Behandlung mit Wasser die Schicht, zuvor mit einer Folie als Zwischenlage für die Lagerung in Berührung gebracht, nach Schrumpfung der Zwischenfolie einer thermischen Behandlung unterworfen wird.

9. Verfahren nach Anspruch 8, dadurch gekennzeichnet, daß die letzte thermische Behandlung darin besteht, die Schicht auf eine Temperatur von wenigstens etwa 100°C zu bringen.

10. Verfahren nach Anspruch 9, dadurch gekennzeichnet, daß die Schicht für wenigstens eine Minute auf wenigstens etwa 100°C gebracht wird.

11. Verfahren nach einem der Ansprüche 1 bis 10, dadurch gekennzeichnet, daß die energieabsorbierende Polyurethanschicht mit einer ritz- und verschleißfesten Schicht aus hitzehärtbarem Polyurethan verbunden wird.

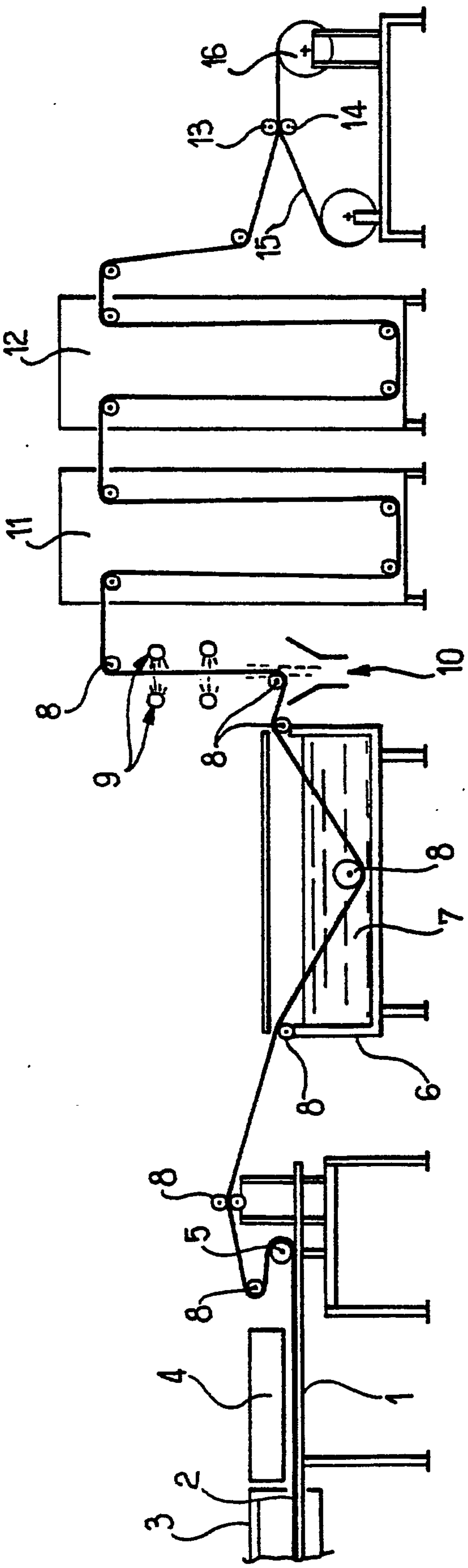


FIG_1

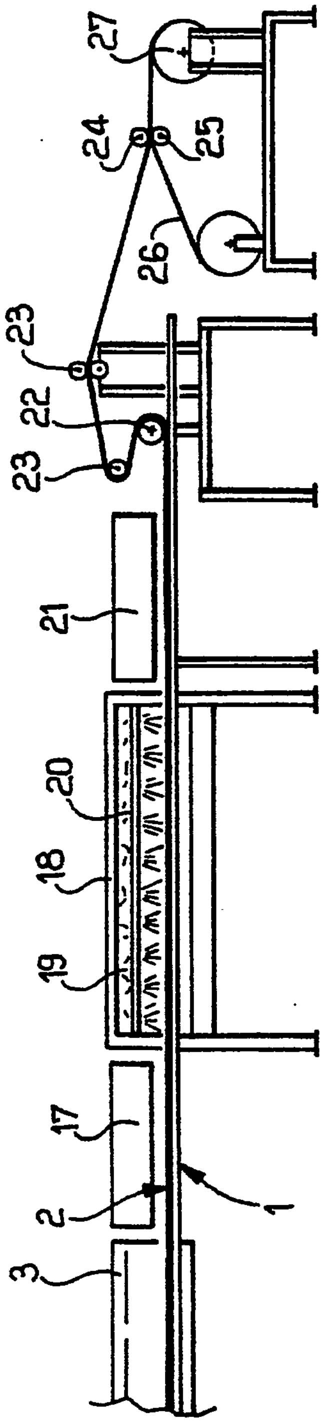


FIG–2